# EUROPÄISCHE PATENTANMELDUNG

(11) **EP 1 502 827 A1**
(43) Veröffentlichungstag der Anmeldung: **02.02.2005**
(21) Anmeldenummer: 04014854.6
(22) Anmeldetag: 24.06.2004
(51) Int. Cl.: B60R 21/20, B62D 1/04

(54) **Fahrzeuglenkrad**

(30) Priorität: 30.07.2003 DE 20311760 U
(71) Anmelder: TRW Automotive Safety Systems GmbH, 63743 Aschaffenburg (DE)
(72) Erfinder: Hauer, Constantin, 63825 Schöllkrippen (DE); Limberger, Alexander, 63071 Offenbach (DE)
(74) Vertreter: Kitzhofer, Thomas, Dipl.-Ing.

(57) **Zusammenfassung**

Ein Fahrzeuglenkrad (10) hat ein Gassackmodul (14), das wenigstens ein erstes Rastelement (18) aufweist, und wenigstens ein in einem Nabenbereich (12) des Lenkrads (10) angeordnetes zweiten Rastelement (20), mit dem das erste Rastelement (18) zur Befestigung des Gassackmoduls (14) im Nabenbereich (12) eine Rastverbindung eingeht. Eines der Rastelemente (20) hat wenigstens einen gegenüber dem anderen Rastelement (18) bewegbaren Entriegelungsabschnitt (22). Das Lenkrad (10) weist im Nabenbereich (12) wenigstens eine Zugangsöffnung (32) auf, durch die ein Demontagewerkzeug (34) in einer Einführrichtung (E) in das Lenkrad (10) eingeführt wird und in Anlage an den Entriegelungsabschnitt (22) zur Bewegung desselben in einer Entriegelungsrichtung (R) kommt. Im Bereich der Zugangsöffnung (32) ist ein Abstützvorsprung (36) vorgesehen, der so zum Entriegelungsabschnitt (22) angeordnet ist, daß sich das Demontagewerkzeug (34) bei einer Hebelbewegung zur Bewegung des Entriegelungsabschnitts (22) in Entriegelungsrichtung (R) an dem Abstützvorsprung (36) abstützt und um diesen kippt.

## Beschreibung

Die Erfindung betrifft ein Fahrzeuglenkrad mit einem Gassackmodul, das wenigstens ein erstes Rastelement aufweist, und wenigstens einem in einem Nabenbereich des Lenkrads angeordneten zweiten Rastelement, mit dem das erste Rastelement zur Befestigung des Gassackmoduls im Nabenbereich eine Rastverbindung eingeht, wobei eines der Rastelemente wenigstens einen gegenüber dem anderen Rastelement bewegbaren Entriegelungsabschnitt hat und das Lenkrad im Nabenbereich wenigstens eine Zugangsöffnung aufweist, durch die ein Demontagewerkzeug in einer Einführrichtung in das Lenkrad eingeführt wird und in Anlage an den Entriegelungsabschnitt zur Bewegung desselben in einer Entriegelungsrichtung kommt.

Um eine schnelle Montage des Gassackmoduls zu ermöglichen, werden Gassackmodule häufig mit Rastbolzen ausgestattet, die mit lenkradseitigen Federelementen eine Rastverbindung eingehen können; wenn das Gassackmodul in Axialrichtung des Moduls, also in Richtung der Rotationsachse des Lenkrads, in die Lenkradnabe eingeschoben wird. Gegenüber herkömmlichen Schraubverbindungen bietet sich bei einer derartigen Befestigung auch der Vorteil einer einfachen Entriegelung. Hierzu wird durch eine vorgesehene Öffnung ein Werkzeug, z.B. ein Schraubendreher oder ein Spezialwerkzeug, in den Bereich der Rastelemente eingebracht und das Federelement zur Seite bewegt, so daß die Rastverbindung gelöst ist und das Gassackmodul aus dem Lenkrad entnommen werden kann.

Diese Entriegelung sollte natürlich so schnell und kontrolliert wie möglich erfolgen, um einerseits Zeit zu sparen und andererseits ausschließen zu können, daß der Monteur zu tief in den Nabenbereich eindringt.

Das erfindungsgemäße Fahrzeuglenkrad erfüllt diese Anforderungen.

Hierzu ist bei einem oben genannten Fahrzeuglenkrad vorgesehen, daß im Bereich der Zugangsöffnung ein Abstützvorsprung vorgesehen ist, der so zum Entriegelungsabschnitt angeordnet ist, daß sich das Demontagewerkzeug bei einer Hebelbewegung zur Bewegung des Entriegelungsabschnitts in Entriegelungsrichtung an dem Abstützvorsprung abstützt und um diesen kippt. Durch den Abstützvorsprung lassen sich der durch das Werkzeug zurückgelegte Entriegelungsweg und die aufgebrachte Entriegelungskraft sehr genau dosieren. Im Vergleich zur herkömmlichen Methode, bei der eine Verschiebung des Werkzeugs direkt auf das Rastelement übertragen wird, kann durch die Verwendung eines Hebels die Entriegelungskraft gesenkt werden. All das führt dazu, daß der Entriegelungsvorgang "gefühlvoller" und exakt durchgeführt werden kann. Außerdem ist durch die Festlegung von zwei räumlichen Positionen, nämlich der Anlage am Entriegelungsabschnitt sowie am Abstützvorsprung, eine exakte Positionierung des Demontagewerkzeugs möglich, obwohl der Entriegelungsabschnitt des Rastelements von außen nicht sichtbar ist.

In einer bevorzugten Ausführungsform der Erfindung weist das zweite Rastelement einen Rastabschnitt auf, der auf der dem Gassackmodul abgewandten Seite eines Skeletts des Nabenbereichs angeordnet ist, während der Entriegelungsabschnitt auf der dem Gassackmodul zugewandten Seite des Skeletts des Nabenbereichs angeordnet ist. Der Großteil des zweiten Rastelements kann so auf dem Nabenboden aufliegen, wobei das zweite Rastelement nur geringe Spannungen auf die Nabe überträgt. So lassen sich auch hohe Kräfte bei der Auslösung des Gassackmoduls aufnehmen. Die Entriegelung des Rastelements läßt sich jedoch bequem von der besser zugänglichen Oberseite der Lenkradnabe bewerkstelligen.

In einer kostengünstigen Ausführungsform ist der Abstützvorsprung einstükkig mit einem Skelett des Nabenbereichs ausgebildet.

Die Einführrichtung kann sich schräg, insbesondere annähernd senkrecht zur Lenkradachse erstrecken. Auch die Entriegelungsrichtung kann sich schräg, insbesondere annähernd senkrecht zur Lenkradachse erstrecken. Zur Handhabung ist es vorteilhaft, wenn sowohl die Entriegelungsrichtung als auch die Einführrichtung in einer Ebene liegen, die senkrecht zur Lenkradachse verläuft, und die Entriegelungsrichtung etwa senkrecht zur Einführrichtung liegt.

In einer bevorzugten Ausführungsform der Erfindung ist das zweite Rastelement ein gebogener Federdraht, und der Entriegelungsabschnitt steht senkrecht zur Erstreckungsebene des restlichen Federdrahts. Auf diese Weise läßt sich der Entriegelungsabschnitt einfach mit dem Demontagewerkzeug erfassen. Eine Seitwärtsbewegung des Entriegelungsabschnitts hat automatisch eine Verformung des Federdrahts zur Folge, was eine einfache Möglichkeit zur Freigabe der ersten Rastelemente darstellt. Die ersten Rastelemente können z.B. als herkömmliche Rastbolzen ausgebildet sein.

Es kann an jedem Ende des Federdrahts ein Entriegelungsabschnitt vorgesehen sein.

Gemäß einer weiteren Ausführungsform der Erfindung ist ein in Einführrichtung hinter dem Entriegelungsabschnitt liegender, als separater Fortsatz ausgebildeter Anschlag vorgesehen, der die Eindringtiefe des Werkzeugs in den Nabenbereich begrenzt. Beim Einschieben des Demontagewerkzeugs in Einführrichtung stößt die Spitze des Werkzeuges auf den Anschlag. Dies hilft, automatisch die richtige Entriegelungsposition zu finden. Sobald das Werkzeug diese Position erreicht hat, läßt sich der Entriegelungsabschnitt in Entriegelungsrichtung durch eine Hebelbewegung des Demontagewerkzeugs bewerkstelligen. Der Anschlag schützt außerdem im Inneren der Lenkradnabe liegende Teile, wie z.B. das restliche Gassackmodul oder elektrische Anschlüsse.

Der Anschlag kann z.B. L-förmig sein, wobei sich ein Schenkel des L in Entriegelungsrichtung hinter dem ausgelenkten Entriegelungsabschnitt befindet. Auf diese Weise kann der Anschlag auch als Endanschlag für eine Auslenkung des Entriegelungsabschnitts in Entriegelungsrichtung dienen. Auch bei einem versehentlichen Abrutschen des Demontagewerkzeugs wird die Spitze des Demontagewerkzeugs vom Anschlag aufgefangen.

Es ist möglich, eine Zugangsöffnung mit einem entsprechenden Abstützvorsprung und/oder Anschlag für jede zu lösende Rastverbindung vorzusehen.

Als Demontagewerkzeug läßt sich vorteilhaft ein geeignetes stabförmiges Werkzeug, insbesondere ein Schraubendreher einsetzen.

Weitere Vorteile und Merkmale der Erfindung ergeben sich aus der nachfolgenden Beschreibung eines Ausführungsbeispiels in Verbindung mit den beigefügten Zeichnungen. In diesen zeigen:
- Figur 1 eine schematische Teildraufsicht eines erfindungsgemäßen Lenkrades mit zur Verdeutlichung abgenommenem Gassackmodul wobei das lenkradseitige Rastelement in Raststellung ist und mit eingeführtem Demontagewerkzeug;
- Figur 2 die Ansicht aus Figur 1, wobei das lenkradseitige Rastelement in Entriegelungsstellung ist;
- Figur 3 eine schematische Ansicht des Nabenbereichs des Lenkrades von der Unterseite der Nabe gesehen, in dem die beiden Positionen des Demontagewerkzeugs verdeutlicht sind; und
- Figur 4 eine partielle schematische Schnittansicht eines erfindungsgemäßen Lenkrads mit einem Gassackmodul.

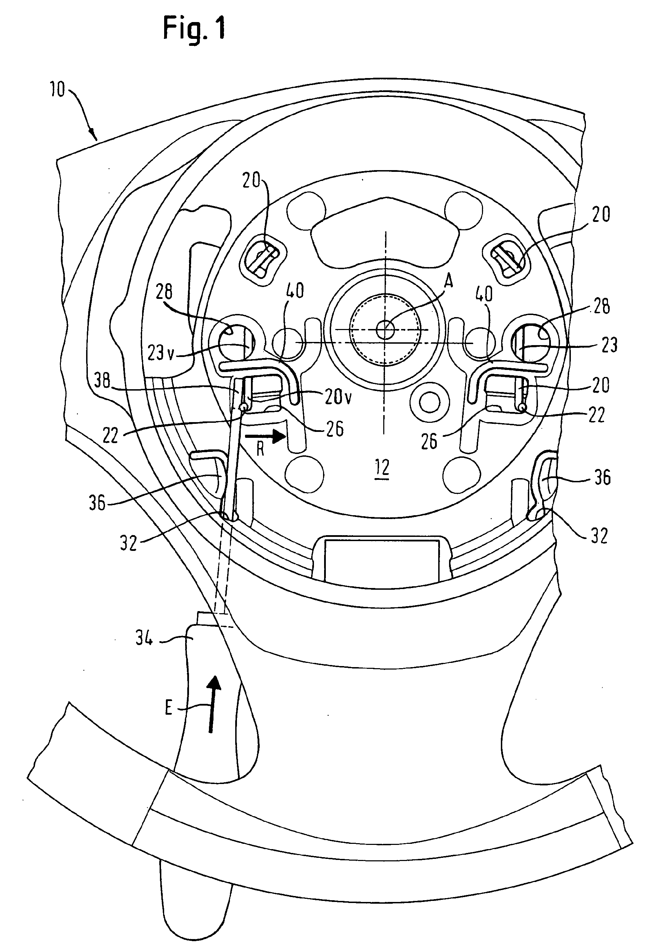

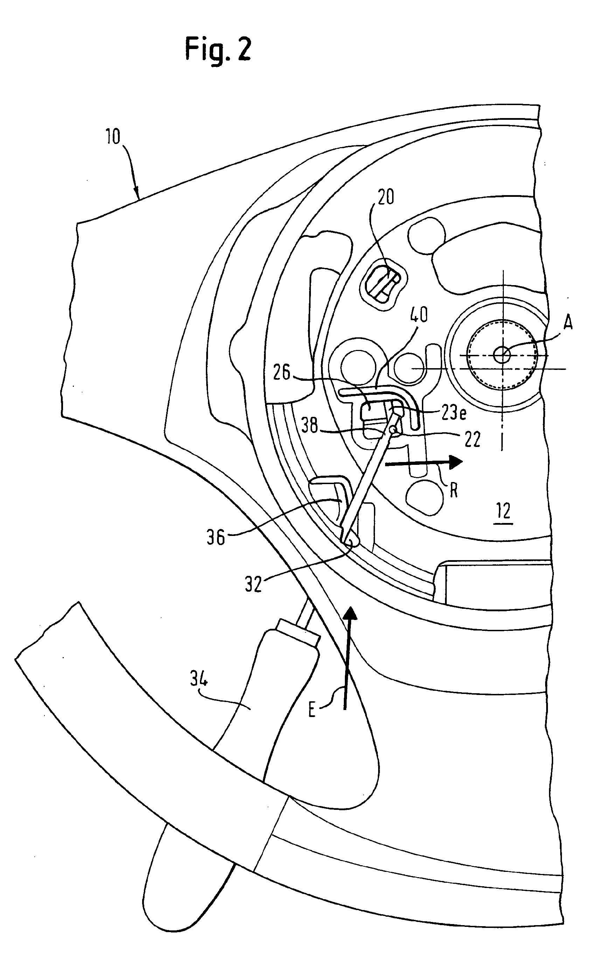

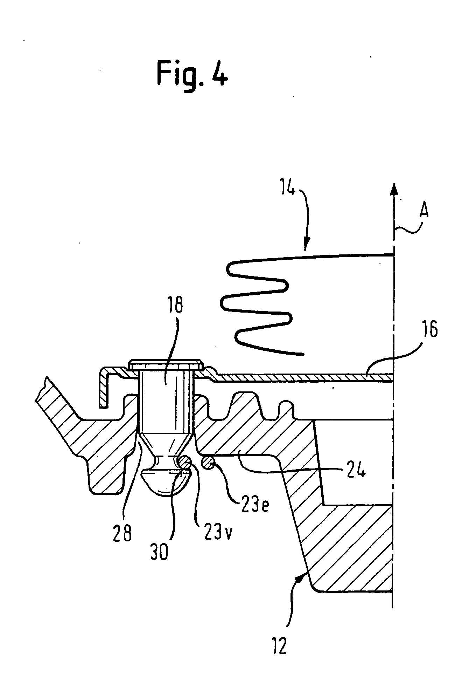

Das in den Figuren gezeigte Lenkrad 10 hat einen (in den Figuren 1 und 2 von oben betrachteten) Nabenbereich 12, in dem ein bekanntes Gassackmodul 14 aufgenommen ist, das in Figur 4 gezeigt ist.

An einer Bodenwand 16 eines Modulgehäuses des Gassackmoduls 14 (siehe Figur 4) sind erste, modulseitige Rastelemente 18 befestigt, in diesem Fall bekannte Rastbolzen, die in ein als langgestreckte Schenkelfeder ausgebildetes zweites, lenkradseitiges Rastelement 20 einrasten, um das Gassackmodul 14 mit dem Nabenbereich 12 zu verbinden.

Das zweite Rastelement 20 ist zu einem Bogen geformt, dessen Enden rechtwinklig zur Ebene des Bogens abgewinkelt sind. Diese abgewinkelten Enden dienen als Entriegelungsabschnitte 22, während dazwischenliegende Teile als Rastabschnitte 23 fungieren. Die Rastabschnitte 23 sind vollständig unterhalb des Nabenbodens 24 angeordnet. Die Entriegelungsabschnitte 22 ragen hingegen durch entsprechende Öffnungen 26 im Nabenboden 24 hindurch, so daß sie von der Oberseite des Nabenbodens 24 zugänglich sind. Das zweite Rastelement 20 ist im Nabenbereich 12 über nicht gezeigte Befestigungen fixiert.

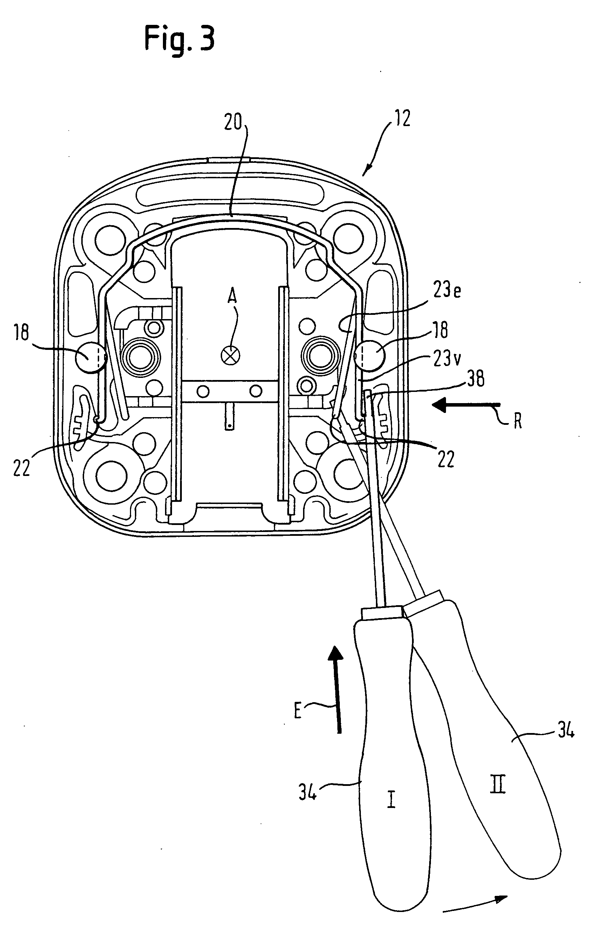

Der Nabenboden 24 weist weitere Öffnungen 28 auf, durch die bei eingesetztem Gassackmodul 14 die ersten Rastelemente 18 ragen (siehe Figur 3). Bei geschlossener Rastverbindung zwischen den ersten und zweiten Rastelementen 18, 20 hintergreift jeweils eine Anlagefläche 30 am ersten Rastelement 18 einen Rastabschnitt 23 des zweiten Rastelements 20 und befestigt so das Gassackmodul 14 im Nabenbereich 12 des Lenkrads 10 (siehe Figur 4).

Die Rastabschnitte 23 lassen sich aus einer verriegelten Stellung in eine entriegelte Stellung bringen, in der das Gassackmodul 14 aus dem Nabenbereich 12 entnommen werden kann. Die beiden Positionen sind in den Figuren mit 23v für die verriegelte Stellung und 23e für die entriegelte Stellung bezeichnet.

Zum Entriegeln der Rastverbindung 18, 20 sind im Nabenbereich 12 Zugangsöffnungen 32 für ein stabförmiges Demontagewerkzeug 34 vorgesehen. Das Demontagewerkzeug 34 endet in einem geradlinigen, stabförmigen Abschnitt und kann z.B. ein Schraubendreher sein. In Figur 3 ist das Demontagewerkzeug 34 zur Verdeutlichung mit durchgezogenen Linien im Bereich des Lenkrads dargestellt, obwohl es auf der anderen Seite des Nabenbereichs 12 liegt und somit eigentlich verdeckt wäre.

Unmittelbar an der Zugangsöffnung 32 im Inneren des Nabenbereichs 12 ist ein einstückig mit einem Skelett des Nabenbereichs 12 ausgebildeter Abstützvorsprung 36 angeordnet. Wird das Demontagewerkzeug 34 wie in Figur 1 gezeigt entlang einer Einführrichtung E durch die Zugangsöffnung 32 in den Nabenbereich 12 eingeschoben, so kommt eine Spitze 38 des Demontagewerkzeugs 34 in Anlage an den Entriegelungsabschnitt 22 des zweiten Rastelements 20. Gleichzeitig liegt das Demontagewerkzeug 34 am Abstützvorsprung 36 an. Der Abstützvorsprung 36 ist auf der dem Entriegelungsabschnitt 22 abgewandten Seite der Zugangsöffnung 32 angeordnet. Zu diesem Zeitpunkt ist die Rastverbindung zwischen den ersten und zweiten Rastelementen 18, 20 noch geschlossen.

Der Abstützvorsprung 36 erfüllt keinerlei Halte- oder Führungsfunktion für das zweite Rastelement 20 und ist mit diesem nicht in Kontakt.

Im nächsten Schritt wird das Demontagewerkzeug 34 in einer Hebelbewegung bewegt (Pfeil in Figur 2), wobei es sich am Entriegelungsabschnitt 22 abstützt und um diesen kippt. Hierbei bewegt sich die Spitze 38 des Demontagewerkzeugs 34 und mit ihr der Entriegelungsabschnitt 22 in einer Entriegelungsrichtung R, senkrecht zur Einführrichtung E.

Sowohl die Einführrichtung E als auch die Entriegelungsrichtung R liegen im wesentlichen senkrecht zu einer Axialrichtung A des Lenkrades 10 (die der Längsrichtung einer Lenkwelle entspricht). Im hier gezeigten Beispiel liegen Entriegelungsrichtung R und Einführrichtung E in einer Ebene senkrecht zur Axialrichtung A.

Durch die Bewegung eines der Entriegelungsabschnitte 22 in Entriegelungsrichtung R wird der entsprechende, dem Entriegelungsabschnitt 22 zugeordnete Rastabschnitt 23 des zweiten Rastelements 20 so bewegt, daß das zweite Rastelement 20 die Anlagefläche 30 des ersten Rastelements 18 freigibt und diese Rastverbindung löst.

Im hier gezeigten Beispiel sind zwei erste Rastelemente 18 vorgesehen, denen jeweils eine Zugangsöffnung 32 zugeordnet ist. Über jede Zugangsöffnung 32 kann eine Rastverbindung 18, 20 gelöst werden. Sind beide Rastverbindungen gelöst, kann das Gassackmodul 14 aus dem Nabenbereich 12 entnommen werden.

Im Nabenbereich 12 ist ein als L-förmiger Anschlag 40 ausgebildeter Fortsatz vorgesehen, der in Einführrichtung E gesehen hinter dem Entriegelungsabschnitt 22 gelegen ist (siehe Figuren 1 und 2). Ein Schenkel des L erstreckt sich senkrecht zur Einführrichtung E, während der zweite Schenkel im wesentlichen parallel zur Einführrichtung E verläuft. Dieser zweite Schenkel ist senkrecht zur Entriegelungsrichtung R und in Entriegelungsrichtung R gesehen hinter dem Entriegelungsabschnitt 22 angeordnet. Auf diese Weise bildet er auch einen Endanschlag für die Entriegelungsbewegung und den Entriegelungsabschnitt 22. Der Anschlag 40 begrenzt also zum einen die Eindringtiefe des Demontagewerkzeugs 34 in den Nabenbereich 12 des Lenkrads 10 und zum anderen den Entriegelungsweg, den der Entriegelungsabschnitt 22 bei der Entriegelung durch das Demontagewerkzeug 34 zurücklegt. In beiden Fällen wird durch den Anschlag 40 auch ein Schutz empfindlicher Teile im Inneren des Nabenbereichs 12 vor dem Demontagewerkzeug 34 oder dem Entriegelungsabschnitt 22 bewirkt.

Der Anschlag 40 ist hier ebenso wie der Abstützvorsprung 36 einstückig mit dem Skelett des Nabenbereichs 12 bzw. des Nabenbodens 24 ausgebildet.

Es wäre jedoch auch möglich, für Abstützvorsprung 36 und Anschlag 40 vom Skelett separate Teile zu verwenden. Abstützvorsprung 36 und Anschlag 40 könnten auch in einer Umschäumung oder Umspritzung des Nabenbodens 24 ausgebildet sein.

Der Anschlag 40 und der Abstützvorsprung 36 sind voneinander separate Elemente, die an unterschiedlichen Stellen im Lenkrad 10 angeordnet sind.

Der Anschlag 40 könnte auch am Boden des Gassackmoduls 14 ausgebildet sein.

Der Anschlag 40 ist ein von der am ersten Rastelement 18 ausgebildeten Anlagefläche 30 separates Teil. Auch das zweite Rastelement 20 liegt nicht direkt am Anschlag 40 an.

Die Bewegung des Entriegelungsabschnitts 22 erfolgt hier zum Inneren des Nabenbereichs 12 hin. Es ist jedoch genauso denkbar, das System so auszulegen, daß eine Entriegelung in der entgegengesetzten Richtung bewirkt wird.

Ebenso ist es möglich, ein zweites Rastelement vorzusehen, mit dem mit einer einzigen Entriegelungsbewegung sämtliche Rastverbindungen zwischen ersten und zweiten Rastelementen auf einmal gelöst werden können.

Die Anordnung der Rastelemente 18, 20 könnte auch umgekehrt erfolgen ,d.h. die ersten Rastelemente 18 könnten auch am Nabenbereich 12 und das zweite Rastelement 20 am Gassackmodul 14 befestigt sein. Ebenso könnten auch mehrere zweite Rastelemente vorgesehen sein.

Die ersten Rastelemente könnten selbstverständlich auch an einem anderen Bauteil des Gassackmoduls, z.B. einem Generatorträger, angeordnet sein.

## Patentansprüche

1. Fahrzeuglenkrad
mit einem Gassackmodul (14), das wenigstens ein erstes Rastelement (18) aufweist,
und wenigstens einem in einem Nabenbereich (12) des Lenkrads (10) angeordneten zweiten Rastelement (20), mit dem das erste Rastelement (18) zur Befestigung des Gassackmoduls (14) im Nabenbereich (12) eine Rastverbindung eingeht,
wobei eines der Rastelemente (20) wenigstens einen gegenüber dem anderen Rastelement (18) bewegbaren Entriegelungsabschnitt (22) hat
und das Lenkrad (10) im Nabenbereich (12) wenigstens eine Zugangsöffnung (32) aufweist,
durch die ein Demontagewerkzeug (34) in einer Einführrichtung (E) in das Lenkrad (10) eingeführt wird und in Anlage an den Entriegelungsabschnitt (22) zur Bewegung desselben in einer Entriegelungsrichtung (R) kommt,
**dadurch gekennzeichnet, daß** im Bereich der Zugangsöffnung (32) ein Abstützvorsprung (36) vorgesehen ist,
der so zum Entriegelungsabschnitt (22) angeordnet ist, daß sich das Demontagewerkzeug (34) bei einer Hebelbewegung zur Bewegung des Entriegelungsabschnitts (22) in Entriegelungsrichtung (R) an dem Abstützvorsprung (36) abstützt und um diesen kippt.

2. Fahrzeuglenkrad nach Anspruch 1, **dadurch gekennzeichnet, daß** der Abstützvorsprung (36) einstückig mit einem Skelett des Nabenbereichs (24) ausgebildet ist.

3. Fahrzeuglenkrad nach einem der vorhergehenden Ansprüche, **dadurch gekennzeichnet, daß** sich die Einführrichtung (E) schräg, insbesondere annähernd senkrecht zur Lenkradachse (A) erstreckt.

4. Fahrzeuglenkrad nach einem der vorhergehenden Ansprüche, **dadurch gekennzeichnet, daß** sich die Entriegelungsrichtung (R) schräg, insbesondere annähernd senkrecht zur Lenkradachse (A) erstreckt.

5. Fahrzeuglenkrad nach einem der vorhergehenden Ansprüche, **dadurch gekennzeichnet, daß** das zweite Rastelement (20) ein gebogener Federdraht ist und der Entriegelungsabschnitt (22) senkrecht zur Erstreckungsebene des restlichen Federdrahts (20) steht.

6. Fahrzeuglenkrad nach Anspruch 5, **dadurch gekennzeichnet, daß** an jedem Ende des Federdrahts ein Entriegelungsabschnitt (22) vorgesehen ist.

7. Fahrzeuglenkrad, insbesondere nach einem der vorhergehenden Ansprüche, mit einem Gassackmodul, das wenigstens ein erstes Rastelement (18) aufweist, und wenigstens einem in einem Nabenbereich (12) des Lenkrads (10) angeordneten zweiten Rastelement (20), mit dem das erste Rastelement (18) zur Befestigung des Gassackmoduls (14) im Nabenbereich (12) eine Rastverbindung (18, 20) eingeht, **dadurch gekennzeichnet, daß** ein in Einführrichtung (E) hinter dem Entriegelungsabschnitt (22) liegender, als separater Fortsatz ausgebildeter Anschlag (40) vorgesehen ist, der die Eindringtiefe des Demontagewerkzeugs (34) in den Nabenbereich (12) begrenzt.

8. Fahrzeuglenkrad nach Anspruch 7, **dadurch gekennzeichnet, daß** der Anschlag (40) L-förmig ist und sich ein Schenkel des L in Entriegelungsrichtung (R) hinter dem ausgelenkten Entriegelungsabschnitt (22) befindet.

9. Fahrzeuglenkrand nach einem der Ansprüche 7 und 8, **dadurch gekennzeichnet, daß** der Anschlag (40) einstückig mit einem Skelett des Nabenbereichs (12) oder einer Bodenwand (16) des Gassackmoduls (14) ausgebildet ist.

10. Fahrzeuglenkrad nach einem der vorhergehenden Ansprüche, **dadurch gekennzeichnet, daß** das zweite Rastelement (20) wenigstens einen Rastabschnitt (23) aufweist, der auf der dem Gassackmodul (14) abgewandten Seite eines Skeletts des Nabenbereichs (12) angeordnet ist, während der Entriegelungsabschnitt (22) auf der dem Gassackmodul (14) zugewandten Seite des Skeletts des Nabenbereichs (12) angeordnet ist.

11. Fahrzeuglenkrad nach einem der vorhergehenden Ansprüche, **dadurch gekennzeichnet, daß** eine Zugangsöffnung (32) für jede Rastverbindung (18, 20) vorgesehen ist.

12. Fahrzeuglenkrad nach einem der vorhergehenden Ansprüche, **dadurch gekennzeichnet, daß** das Demontagewerkzeug (34) ein stabförmiges Werkzeug, insbesondere ein Schraubendreher ist.
